# EUROPÄISCHE PATENTSCHRIFT

(11) **EP 1 483 515 B1**
(45) Veröffentlichungstag und Bekanntmachung des Hinweises auf die Patenterteilung: **17.01.2007**
(21) Anmeldenummer: 02758378.0
(22) Anmeldetag: 23.07.2002
(51) Int. Cl.: F16D 65/18

(54) **BREMSE, INSBESONDERE FÜR WINDKRAFTANLAGEN**
BRAKE, ESPECIALLY FOR WIND FARMS
FREIN, EN PARTICULIER POUR AEROGENERATEUR

(30) Priorität: 08.03.2002 DE 20203794 U
(43) Veröffentlichungstag der Anmeldung: 08.12.2004
(73) Patentinhaber: Hanning & Kahl GmbH & Co. KG, 33813 Oerlinghausen (DE)
(72) Erfinder: AGARDY, Gabor-Josef, 32052 Herford (DE); EDZARDS, Jürn, 33758 Schloss Holte-Stukenbrock (DE)
(74) Vertreter: Wiebusch, Manfred
(86) Internationale Anmeldenummer: PCT/EP2002/008175
(87) Internationale Veröffentlichungsnummer: WO 2003/076818

(56) Entgegenhaltungen:
- WO-A-01/21977
- DE-A- 3 516 821
- DE-A- 19 605 988
- GB-A- 2 004 607
- GB-A- 2 074 261
- US-A- 4 354 581
- US-A- 4 513 839

## Beschreibung

Die Erfindung betrifft eine Bremse, insbesondere für Windkraftanlagen, mit einem Satz Bremsbacken und einem Antrieb für die Bremsbacken, der an einem Hebel angreift, der in einer zu den Bremsbacken parallelen Ebene schwenkbar ist und über ein Getriebe, das die Schwenkbewegung in eine Axialbewegung umsetzt, auf die Bremsbacken wirkt, wobei das Getriebe eine axial verschiebbar und drehfest in einem Gehäuse geführte Spindel aufweist, die mit einem Ende auf eine der Bremsbacken wirkt und die mit einer an dem Hebel ausgebildeten Gewindebuchse in Gewindeeingriff steht.

Eine Bremse dieser Art ist aus GB-A-2 004 607 bekannt.

Bremsen für den Rotor einer Windkraftanlage oder für ähnliche Großaggregate müssen in der Lage sein, hohe Bremskräfte zu erzeugen, und erfordern daher einen entsprechend stark ausgelegten Antrieb. Bisher wird ein hydraulischer Antrieb eingesetzt, der unmittelbar die Anpreßkraft für die Bremsbacken erzeugt. Die verhältnismäßig große und schwere Kolben/Zylindereinheit des hydraulischen Antriebs liegt dann unmittelbar hinter den Bremsbacken. Bei beengten räumlichen Verhältnissen, beispielsweise in der Gondel einer Windkraftanlage, kann es sich daher als schwierig erweisen, den nötigen Platz für den Antrieb bereitzustellen.

Hydraulische Antriebe haben zudem den Nachteil, daß sie verhältnismäßig umweltbelastend, teuer und wartungsaufwendig sind, da eine geeignete Hydraulikflüssigkeit sowie Dichtungen und dergleichen zur Abdichtung des Hydrauliksystems benötigt werden und da aus Gründen der Betriebssicherheit der Füllstand und der Zustand der Hydraulikflüssigkeit von Zeit zu Zeit überprüft werden muß. Unter diesen Gesichtspunkten wäre es wünschenswert, statt eines hydraulischen Antriebs einen elektromechanischen Antrieb einzusetzen. Es erweist sich jedoch als schwierig, mit Hilfe eines elektromechanischen Antriebs eine ausreichende Anpreßkraft für die Bremsbacken bereitzustellen.

Aufgabe der Erfindung ist es, eine Bremse der eingangs genannten Art zu schaffen, die eine größere Freiheit hinsichtlich der Gestaltung und Anordnung des Antriebs aufweist und die wahlweise als aktive Bremse oder als passive Bremse ausgelegt werden kann und sich einfach von einem Bremsentyp auf den anderen umrüsten läßt.

Diese Aufgabe wird dadurch gelöst, daß das Getriebe gemäß dem Kennzeichnenden Teil des Anspruchs 1 in zwei umgekehrten Stellungen im Gehäuse montierbar ist.

Bei der erfindungsgemäßen Bremse kann der Antrieb seitlich versetzt zu den Bremsbacken angeordnet sein, was sich unter bestimmten Einbaubedingungen als vorteilhaft erweist. Da außerdem der Antrieb über den Hebel und das Getriebe auf die Bremsbacken einwirkt, läßt sich durch die Hebel- und Getriebeübersetzung eine bedeutende Kraftverstärkung erreichen, so daß der Antrieb selbst entsprechend schwächer ausgelegt werden kann. Dies ermöglicht insbesondere auch den Einsatz elektromechanischer Antriebe.

Die Bremse kann wahlweise als aktive Bremse ausgelegt sein, bei der die Bremsbacken in die bremswirksame Position gebracht werden, wenn der Antrieb erregt ist, oder als passive Bremse, beispielsweise als Federspeicherbremse, bei der der Antrieb aktiviert werden muß, um die Bremse in der gelösten Stellung zu halten, so daß die Bremse bei einem Abfall der Antriebsenergie automatisch greift. Im letzteren Fall muß die Spindel mit Hilfe des Getriebes und des Hebels in die den Bremsbacken entgegengesetzten Richtung verstellt werden, um das Federpaket zu spannen. Erfindungsgemäß ist das Getriebe so ausgebildet, daß es sich je nach Anwendungsfall in umgekehrten Stellungen in dem Gehäuse montieren läßt, so daß aktive und passive Bremsen weitgehend unter Verwendung identischer Bauteile hergestellt werden können und eine einfache Umrüstung von einem Bremsentyp auf den anderen möglich ist.

Vorteilhafte Ausgestaltungen der Erfindung ergeben sich aus den Unteransprüchen.

Für eine leichtgängige Verstellung kann die Gewindebuchse als Kugelbuchse ausgebildet sein. Ebenso ist der Einsatz eines Planetenrollengewindes, einer Planeten-Wälz-Gewindespindel oder einer Differentialrollenspindel möglich. Außerdem ist es bevorzugt, die Gewindebuchse mit Wälzlagern in dem Gehäuse zu lagern und insbesondere durch ein Axiallager gegen die beim Verstellen der Spindel auftretenden axialen Reaktionskräfte abzustützen.

Im folgenden werden Ausführungsbeispiele der Erfindung anhand der Zeichnung näher erläutert.

Es zeigen:
- Fig. 1: eine Ansicht einer Scheibenbremse für eine Windkraftanlage;
- Fig. 2: einen Schnitt längs der Linie II-II in Figur 1; und
- Fig. 3: einen Schnitt durch eine Federspeicherbremse.

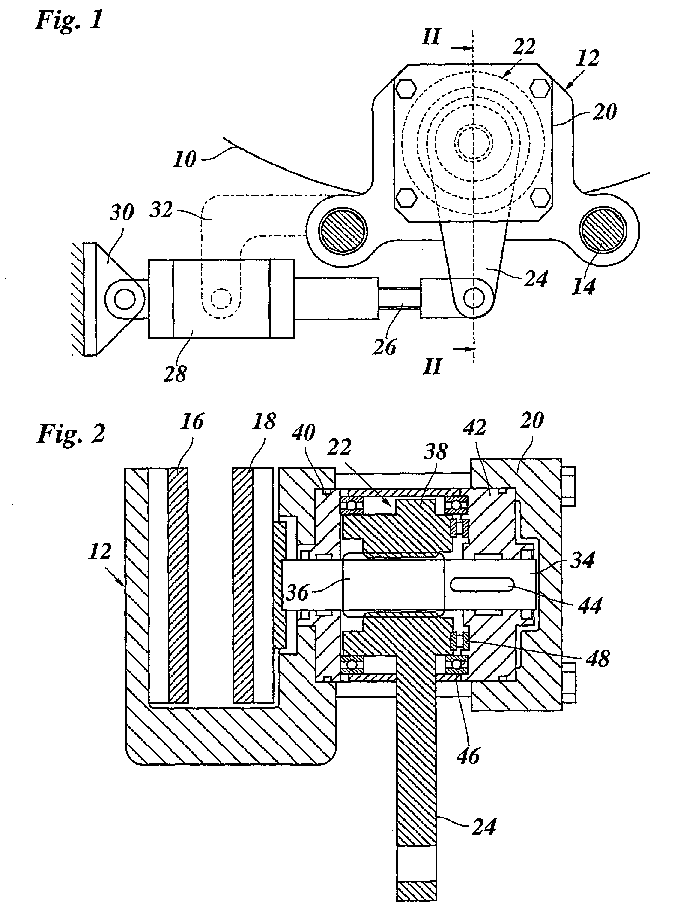

Die in Figuren 1 und 2 gezeigte Scheibenbremse weist einen am Rand einer Bremsscheibe 10 angeordneten Schwimmsattel 12 auf, der auf achsparallel zur Bremsscheibe 10 verlaufenden Führungsstangen 14 verschiebbar geführt ist und die Bremsscheibe 10 mit zwei Bremsbacken 16, 18 umgreift, wie in Figur 2 zu erkennen ist. An den Schwimmsattel 12 ist ein Gehäuse 20 angebaut, das ein Getriebe 22 aufnimmt und aus dem ein Hebel 24 herausragt, der in einer zu der Bremsscheibe 10 und den Bremsbacken 16, 18 parallelen Ebene um die Achse des Getriebes 22 schwenkbar ist.

Das freie Ende des Hebels 24 ist gelenkig mit einer Stellstange 26 eines elektromechanischen Antriebs 28 verbunden. Der Antrieb 28 ist im gezeigten Beispiel schwenkbar an einem Widerlager 30 befestigt, das fest am Gestell der Windkraftanlage sitzt. Wahlweise könnte der Antrieb 28 jedoch auch mit Hilfe eines Halters 32 an dem Schwimmsattel 12 gehalten sein, wie in Figur 1 strichpunktiert angedeutet ist.

Das Getriebe 22 wird im gezeigten Beispiel durch eine Spindel 34 gebildet, die in ihrem mittleren Abschnitt ein Gewinde 36, beispielsweise ein Rollgewinde trägt und mit einer am inneren Ende des Hebels 24 ausgebildeten Gewindebuchse 38, beispielsweise einer Kugelbuchse, in Eingriff steht. Die auf beiden Seiten des Gewindes 36 gelegenen Endabschnitte der Spindel 34 sind verschiebbar in Gleitlagern 40, 42 geführt und tragen Keile 44, mit denen die Spindel gegen Verdrehung gesichert ist. Die Gewindebuchse 38 ist mit Radial-Wälzlagern 46 drehbar im Getriebegehäuse 20 gelagert. Auf der den Bremsbacken 16, 18 entgegengesetzten Seite wird sie zusätzlich durch Axiallager 48 im Getriebegehäuse abgestützt.

Das in Figur 2 linke Ende der Spindel 34 ist mit der beweglichen Bremsbacke 18 verbunden. Wenn der Hebel 24 mit Hilfe des Antriebs 28 um die Achse der Spindel 34 geschwenkt wird, so verlagert sich die Spindel 34 nach links in Figur 2, und die Bremsbacken 16, 18 werden gleichmäßig gegen die Bremsscheibe angepreßt. Die dabei an der Gewindebuchse 38 auftretenden Reaktionskräfte werden durch die Axiallager 48 aufgenommen.

Im gezeigten Beispiel ist der Antrieb 28 umkehrbar, und die Bremse wird gelöst, indem die Stellstange 26 mit Hilfe des Antriebs ausgefahren wird, so daß der Hebel 24 wieder in die Ausgangsstellung zurückgeschwenkt wird.

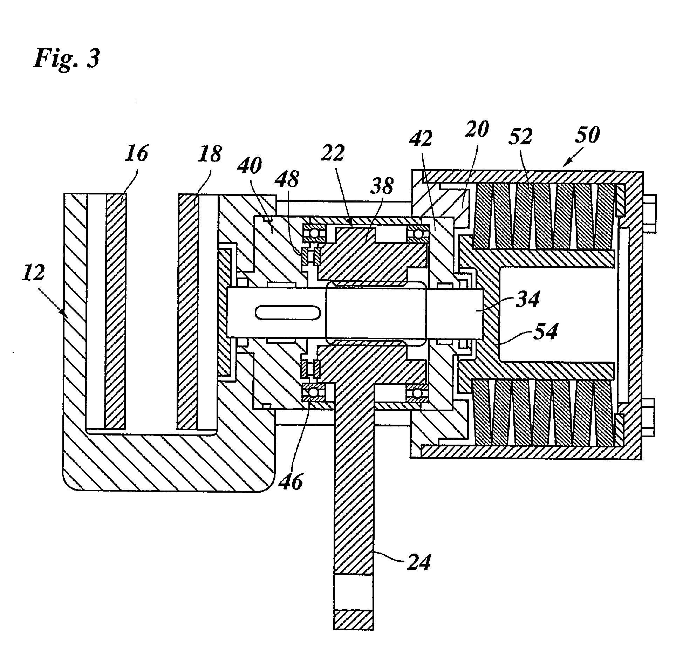

Figur 3 zeigt eine abgewandelte Ausführungsform der Bremse, die in diesem Fall als Federspeicherbremse ausgebildet ist. An das Getriebegehäuse 20 ist auf der dem Schwimmsattel 12 entgegengesetzten Seite ein Federspeicher 50 mit einem Federpaket 52 angebaut. Das Getriebe 22 ist hier in umgekehrter Stellung in das Gehäuse 20 eingebaut, so daß die Axiallager 48 auf der den Bremsbacken 16, 18 zugewandten Seite liegen. Der in Figur 3 nicht gezeigte Antrieb ist bei gelöster Bremse erregt und hält die Spindel 34 in einer nach rechts verschobenen Position, in der sie über einen Ausrücker 54 das Federpaket 52 komprimiert hält. Wenn der Antrieb 28 abgeschaltet wird (oder durch Stromausfall unwirksam wird), so wird die bewegliche Bremsbacke 18 durch das gespannte Federpaket 52 über den Ausrücker 54 und die Spindel 34 nach links in die bremswirksame Position gedrückt. Das Getriebe 22 darf in diesem Fall nicht selbsthemmend sein, damit der Hebel 24 allein durch die Kraft des Federpakets 52 verschwenkt werden kann.

Bei beiden Ausführungsformen kann eine zusätzliche Verrastung oder Verriegelung für den Hebel 24 und/oder den Antrieb 28 vorgesehen sein, so daß sich die Bremse auch ohne dauernde Aktivierung des Antriebs in der wirksamen oder der unwirksamen Stellung oder in beiden Stellungen arretieren läßt. Weiterhin kann es zweckmäßig sein, den Hebel 24 elastisch auszubilden oder elastisch, beispielsweise durch eine Schlingfeder, mit der Gewindebuchse 38 zu koppeln, damit die Wirkung des Antriebs gedämpft wird und/oder ein sicheres Einfallen und Wirksamwerden der Verriegelung gewährleistet wird.

## Patentansprüche

1. Bremse, insbesondere für Windkraftanlagen, mit einem Satz Bremsbacken (16, 18) und einem Antrieb (28) für die Bremsbacken, der an einem Hebel (24) angreift, der in einer zu den Bremsbacken (16, 18) parallelen Ebene schwenkbar ist und über ein Getriebe (22), das die Schwenkbewegung in eine Axialbewegung umsetzt, auf die Bremsbacken (16, 18) wirkt, wobei das Getriebe (22) eine axial verschiebbar und drehfest in einem Gehäuse (20) geführte Spindel (34) aufweist, die ein erstes und ein zweites Ende aufweist und mit einem der Enden auf eine der Bremsbacken (18) wirkt und die mit einer an dem Hebel (24) ausgebildeten Gewindebuchse (38) in Gewindeeingriff steht, **dadurch gekennzeichnet, daß** das Getriebe (22) so in zwei umgekehrten Stellungen im Gehäuse (20) montierbar ist, daß in einer ersten Stellung das erste Ende der Spindel (34) und in einer zweiten Stellung das zweite Ende der Spindel (34) auf die Bremsbacken (18) wirkt.

2. Bremse nach Anspruch 1, **dadurch gekennzeichnet, daß** das Getriebe (22) ein Spindelgetriebe ist.

3. Bremse nach Anspruch 2, **dadurch gekennzeichnet, daß** das Getriebe (22) ein Kugelspindelgetriebe ist.

4. Bremse nach Anspruch 2, **dadurch gekennzeichnet, daß** das Getriebe (22) eine Spindel mit Planetenrollengewinde aufweist.

5. Bremse nach einem der vorstehenden Ansprüche, **dadurch gekennzeichnet, daß** die Gewindebuchse (38) mit Wälzlagern (46) im Gehäuse (20) gelagert ist.

6. Bremse nach Anspruch 5. **dadurch gekennzeichnet, daß** sich die Gewindebuchse (38) an mindestens einem axialen Ende über Axiallager (48) am Gehäuse abstützt.

7. Bremse nach einem der vorstehenden Ansprüche, **dadurch gekennzeichnet, daß** sie als Federspeicherbremse ausgebildet ist und daß das Getriebe (22) in der zweiten Stellung ein Federpaket (52) spannt, wenn der Antrieb (28) aktiv ist, und die Kraft des Federpakets (52) auf die Bremsbacken (16, 18) wirken läßt, wenn der Hebel (24) freigegeben wird.

## Claims

1. Brake, in particular for wind power plants, comprising a set of brake shoes (16, 18) and an actuator (28) for the brake shoes, the actuator (28) acting upon a lever (24) which is pivotable in a plane in parallel with the brake shoes (16, 18) and acts upon the brake shoes (16, 18) through a transmission (22) which translates the pivotal movement into an axial movement, the transmission (22) comprising a spindle (34) which is non-rotatably and axially displaceably guided in a housing (20) and has a first end and a second end and acts with one of the ends upon one of the brake shoes (18) and is in threaded engagement with a threaded sleeve (38) formed at the lever (24), **characterised in that** the transmission (22) is adapted to be mounted in the housing (20) in two inverted positions such that, in a first position, the first end of the spindle (36) and, in a second position, the second end of the spindle (34) acts upon the brake shoes (18).

2. Brake according to claim 1, **characterised in that** the transmission (22) is a spindle-type transmission.

3. Brake according to claim 2, **characterised in that** the transmission (22) is a ball-type spindle transmission.

4. Brake according to claim 2, **characterised** that the transmission (22) has a spindle with a planetary ball threading.

5. Brake according to any of the preceding claims, **characterised** that the threaded sleeve (38) is supported in the housing (20) with roller bearings (46).

6. Brake according to claim 5, **characterised in that** the threaded sleeve (38) has at least one axial end supported at the housing via an axial bearing (48).

7. Brake according to any of the preceding claims, **characterised in that** it is configured as a spring accumulator brake and **in that** the transmission (26), when in the second position, biases a spring assembly (52) when the actuator (28) is active, and permits the force of the spring assembly (52) to act upon the brake shoes (16, 18), when the lever (24) is released.

## Revendications

1. Frein, en particulier pour éoliennes, comportant un ensemble de mâchoires de frein (16, 18) et un dispositif d'entraînement (28) pour les mâchoires de frein, lequel agit sur un levier (24) qui peut pivoter dans un plan parallèle aux mâchoires de frein (16, 18), et agit par l'intermédiaire d'une transmission (22), qui convertit le mouvement de pivotement en un mouvement axial, sur les mâchoires de frein (16, 18), la transmission (22) comportant une broche (34) coulissant axialement et guidée solidairement en rotation dans un boîtier (20), laquelle broche présente une première extrémité et une seconde extrémité et agit par l'une des extrémités sur l'une des mâchoires de frein (18), et qui est en prise filetée avec une douille taraudée (38) réalisée sur le levier (24), **caractérisé en ce que** la transmission (22) peut être montée dans deux positions inversées dans le boîtier (20) de manière que sur les mâchoires de frein (18) agissent dans une première position, la première extrémité de la broche (34) et, dans une seconde position, la seconde extrémité de la broche (34).

2. Frein selon la revendication 1, **caractérisé en ce que** la transmission (22) est une transmission à broche.

3. Frein selon la revendication 2, **caractérisé en ce que** la transmission (22) est une transmission à broche à billes.

4. Frein selon la revendication 2, **caractérisé en ce que** la transmission (22) comporte une broche avec filetage pour rouleaux planétaires.

5. Frein selon l'une des revendications précédentes, **caractérisé en ce que** la douille taraudée (38) est montée par des paliers à roulement (46) dans le boîtier (20).

6. Frein selon la revendication 5, **caractérisé en ce que** la douille taraudée (38) prend appui sur le boîtier, contre au moins une extrémité axiale, par un palier axial (48).

7. Frein selon l'une des revendications précédentes, **caractérisé en ce qu'**il est réalisé sous la forme d'un frein accumulateur à ressort et **en ce que** la transmission (22), dans la deuxième position, serre un paquet de ressorts (52) lorsque le dispositif d'entraînement (28) est actif, et fait agir la force du paquet de ressorts (52) sur les mâchoires de frein (16, 18), lorsque le levier (24) est dégagé.
